(19) Europäisches Patentamt
European Patent Office
Office européen des brevets

(11) **EP 3 405 813 B1**

(12) **FASCICULE DE BREVET EUROPEEN**

(45) Date de publication et mention de la délivrance du brevet:
**08.04.2020 Bulletin 2020/15**

(21) Numéro de dépôt: **17700255.7**

(22) Date de dépôt: **11.01.2017**

(51) Int Cl.:
*G01S 19/30* (2010.01)     *G01S 19/28* (2010.01)
*G01S 19/21* (2010.01)     *G01S 19/22* (2010.01)

(86) Numéro de dépôt international:
**PCT/EP2017/050502**

(87) Numéro de publication internationale:
**WO 2017/125299 (27.07.2017 Gazette 2017/30)**

(54) **DISPOSITIF DE NAVIGATION PAR SATELLITE ET PROCEDE DE CONTROLE DU MEME**

SATELLITENNAVIGATIONSVORRICHTUNG UND VERFAHREN ZUR STEUERUNG DAVON

SATELLITE NAVIGATION DEVICE AND METHOD FOR CONTROLLING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2016 FR 1650388**

(43) Date de publication de la demande:
**28.11.2018 Bulletin 2018/48**

(73) Titulaire: **Institut Supérieur de l'Aéronautique et de l'Espace**
**31055 Toulouse Cedex 4 (FR)**

(72) Inventeur: **CALMETTES, Vincent**
**31500 Toulouse (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**CN-A- 103 809 191**

• **BHATTACHARYYA SUSMITA ET AL: "Vector loop RAIM in nominal and GNSS-stressed environments", IEEE TRANSACTIONS ON AEROSPACE AND ELECTRONIC SYSTEMS, IEEE SERVICE CENTER, PISCATAWAY, NJ, US, vol. 50, no. 2, 1 avril 2014 (2014-04-01), pages 1249-1268, XP011553710, ISSN: 0018-9251, DOI: 10.1109/TAES.2013.120679 [extrait le 2014-07-08]**
• **MATTHEW LASHLEY ET AL: "A valid comparison of vector and scalar tracking loops", POSITION LOCATION AND NAVIGATION SYMPOSIUM (PLANS), 2010 IEEE/ION, IEEE, PISCATAWAY, NJ, USA, 4 mai 2010 (2010-05-04), pages 464-474, XP031706991, ISBN: 978-1-4244-5036-7**

**Description**

La présente invention concerne le domaine de la navigation basée sur l'utilisation de signaux d'un système de positionnement par satellites ou GNSS (pour *Global Navigation Satellite System* en anglais). Ces signaux permettent de mesurer des retards de propagation et des fréquences Doppler par rapport à des satellites à positions et vitesses connues. La qualité des mesures de retard impacte la précision en position, alors que la qualité des fréquences Doppler impacte la précision en vitesse.

Parmi les difficultés devant être résolues au sein des récepteurs de navigation par satellite, on peut citer la poursuite intègre des signaux dans des environnements difficiles. Les problèmes posés par ce type d'environnement sont principalement, l'atténuation du signal direct nommé LOS (pour *Line Of Sight* en anglais), le masquage de ce signal, ou la présence de multi-trajets que nous nommerons ici NLOS (pour *Non Line Of Sight* en anglais).

Le principe de base d'un récepteur de navigation consiste à mesurer, pour chaque satellite dont il reçoit un signal, un délai qui correspond au temps mis par le signal pour lui parvenir depuis le satellite et une fréquence doppler qui mesure un décalage de fréquence dû à la vitesse relative du récepteur et du satellite. A partir de ces mesures effectuées sur plusieurs satellites et de la connaissance de la position et de la vitesse de chaque satellite, on peut en déduire la position du récepteur ainsi que sa vitesse par rapport à un repère terrestre.

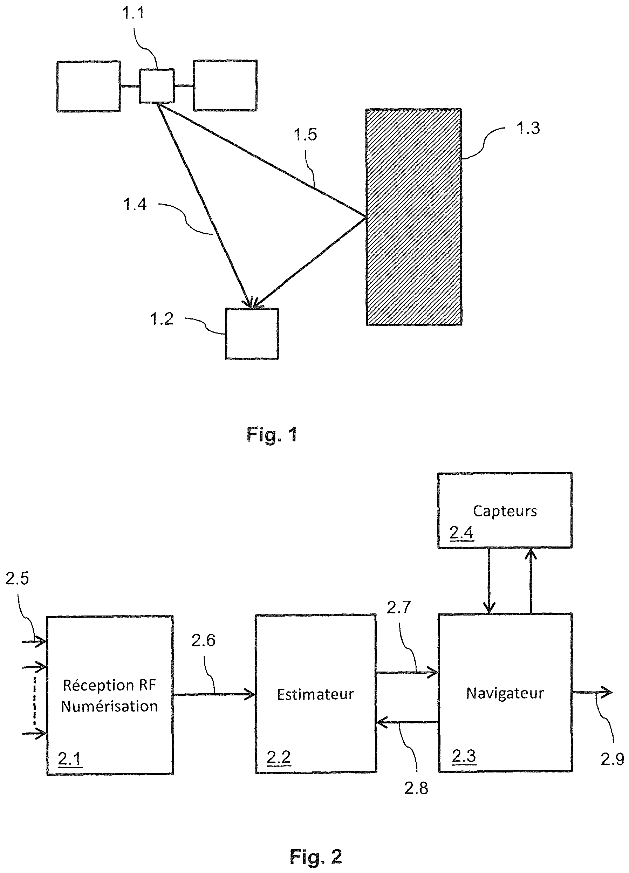

La **figure 1** illustre la transmission d'un signal entre un satellite **1.1** et un récepteur de navigation **1.2.** Le signal émis par le satellite **1.1** peut être reçu par un trajet direct **1.4**, c'est le signal LOS. Mais ce signal peut également parvenir au récepteur de navigation après avoir été réfléchi, une ou plusieurs fois, par des obstacles **1.3.** Ces obstacles peuvent être constitués de bâtiments en environnement urbain, par exemple. Le signal suit alors un trajet **1.5** NLOS, c'est-à-dire indirect. Il est ainsi fréquent que le navigateur reçoive de multiples copies d'un même signal émis, chaque copie effectuant un trajet qui lui est propre. Ce phénomène est connu sous le nom de multi-trajet.

La **figure 2** illustre l'architecture générale d'un récepteur de navigation par satellite.

Les signaux **2.5** émis par les satellites sont reçus par un module **2.1** de réception de radio fréquence RF et numérisés. Les signaux satellites numérisés **2.6** sont alors transmis à un estimateur **2.2.** L'estimateur est chargé de fournir une estimation **2.7,** pour chaque satellite, des mesures de délai et de fréquence doppler associés ainsi que des valeurs efficaces des bruits sur ces estimations. Ces estimations sont transmises à un navigateur **2.3.** Le navigateur **2.3** est chargé du calcul des informations de position et de vitesse du récepteur à partir des estimations reçues depuis l'estimateur. Il utilise également un modèle dynamique du déplacement du récepteur qu'il exploite pour produire sa propre estimée des mesures de délai et de fréquence doppler de chaque satellite. Connaissant la position du navigateur et sa vitesse à un instant $t$, le modèle permet de prédire la position et la vitesse du navigateur à un instant $t + \delta t$, et donc les informations de délai et de fréquence doppler pour chaque satellite. Ces estimées **2.8** produites par le navigateur permettent de juger de la pertinence des mesures faites par l'estimateur sur le signal reçu et éventuellement de les corriger. De manière optionnelle, le navigateur peut également recevoir des informations de divers capteurs **2.4** tel qu'une centrale inertielle fournissant des mesures instantanées d'accélération projetées dans le repère de navigation grâce à l'utilisation de gyroscopes donnant des indications de vitesse angulaire. Ces informations peuvent alors être intégrées au modèle dynamique du navigateur et en améliorer la précision des estimées. C'est le navigateur qui, à l'aide de ses propres estimées et des estimées reçues de l'estimateur, consolide l'information de position et de vitesse **2.9** fournie comme résultat du positionnement.

L'estimation du délai et de la fréquence doppler du signal reçu est basée sur ce que l'on appelle des boucles de poursuite au sein de l'estimateur. Le principe de fonctionnement de la boucle de poursuite est le suivant. Le signal reçu du satellite a une forme connue. Il est reçu par le récepteur avec un décalage en phase et en fréquence lié au temps de trajet et à la vitesse relative. Pour obtenir une estimation de ces décalages permettant d'estimer le délai et la fréquence doppler recherchée, un réplica de ce signal est créé localement. Ce signal réplica est généré par des oscillateurs contrôlés numériquement appelés NCO (pour *Numerically Controlled Oscillators* en anglais) et résulte du mélange d'un signal de porteuse et d'un signal de code. Ces NCO sont paramétrés en fonction d'une valeur de fréquence doppler et d'une erreur de phase s'agissant du signal de porteuse, en fonction d'une fréquence Doppler et d'une erreur de délai s'agissant du signal de code, et génèrent un signal, réplique du signal émis par le satellite, dont le délai et la fréquence correspondent au délai et à la fréquence doppler du signal reçu. Le signal réplique est alors comparé au signal reçu à l'aide d'un corrélateur. Le résultat de la corrélation sera d'autant plus élevé que le signal réplique sera proche du signal reçu et donc que les valeurs de délai et de fréquence doppler utilisées pour paramétrer les NCO seront proches du délai et de la fréquence doppler affectant le signal reçu du satellite. Une boucle est alors effectuée pour affiner progressivement les paramètres des NCO jusqu'à l'obtention d'une forte corrélation. Lorsque celle-ci est obtenue, les valeurs de délai et de fréquence doppler correspondant à ces paramètres des NCO fournissent l'estimée par la boucle de suivi des valeurs de délai et de fréquence doppler affectant le signal satellite reçu. En pratique plusieurs corrélateurs sont nécessaires pour construire des discriminateurs qui mesurent les erreurs de fréquence, de phase et de délai.

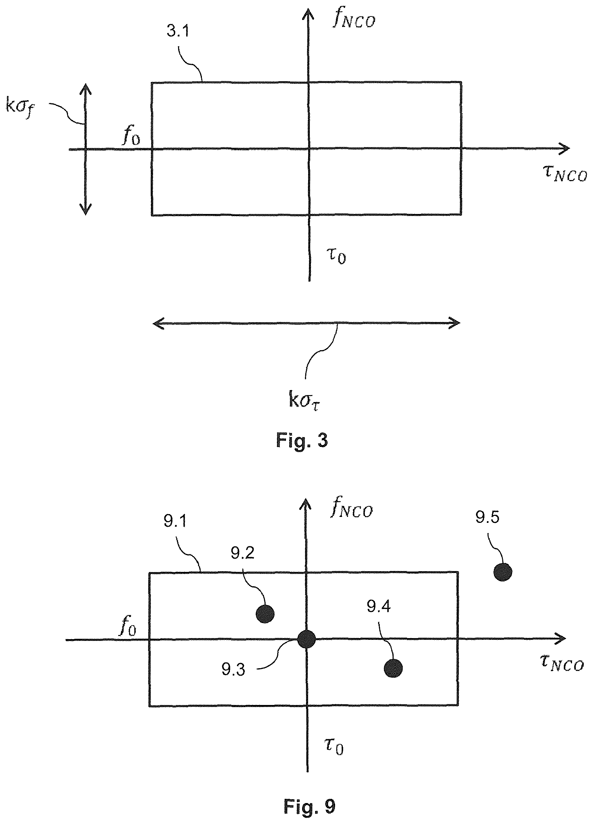

Un des paramètres important de la convergence par corrélation utilisée est la fenêtre de discrimination délai-fréquence. On définit ici cette fenêtre de discrimination comme étant la plage de mesure dans laquelle opère les estimateurs en utilisant les sorties des discriminateurs élaborées par corrélation du signal reçu avec des répliques locales. En pratique le signal réplique est défini à partir d'une estimation préalable de la valeur de délai et de fréquence doppler. Cette estimation préalable est affectée d'un bruit dont on connait la valeur efficace que ce soit pour le délai ou pour la fréquence doppler. La taille de la fenêtre de discrimination doit être dimensionnée en prenant en compte la connaissance des valeurs de bruit efficace affectant l'estimation initiale. Elle représente la plage exprimée en deux dimensions, le délai et la fréquence doppler, dans laquelle on va rechercher une corrélation avec le signal reçu. La fenêtre de discrimination délai-fréquence est illustrée par la **figure 3.**

On voit sur cette figure la fenêtre de discrimination **3.1** dans un espace à deux dimensions défini par les valeurs $\tau_{NCO}$ de délai et les valeurs $f_{NCO}$ de fréquence doppler du signal réplique. La fenêtre de discrimination est centrée sur les valeurs de l'estimée définie par le délai $\tau_0$ et la fréquence doppler $f_0$. Les dimensions de la fenêtre de discrimination sont définies par une valeur scalaire k multipliée par la valeur efficace du bruit affectant le délai, $\sigma_\tau$, et la fréquence doppler, $\sigma_f$. La mesure va consister à rechercher au sein de la fenêtre de discrimination les valeurs de délai et de fréquence doppler qui, appliqués au signal réplique, donnent la meilleure corrélation avec le signal reçu.

On comprend aisément que ce mécanisme de convergence est d'autant plus efficace, rapide et précis que les valeurs initiales de délai et de fréquence doppler utilisées pour générer le signal réplique sont proches des valeurs de délai et de fréquence doppler affectant le signal reçu. Dans la pratique, en régime établi, les valeurs de délai et de fréquence doppler à un instant $t$ sont constituées d'estimées obtenues à l'instant $t - \delta t$. Par contre, au démarrage du récepteur, en l'absence d'estimées préalables, le phénomène de convergence peut prendre un certain temps, temps connu sous le nom de temps d'acquisition du satellite. Une fois le satellite « accroché », c'est-à-dire une fois que l'on a obtenu des estimées proches des valeurs réelles de délai et de fréquence doppler affectant le signal reçu, la convergence est rapide, la boucle poursuit le satellite.

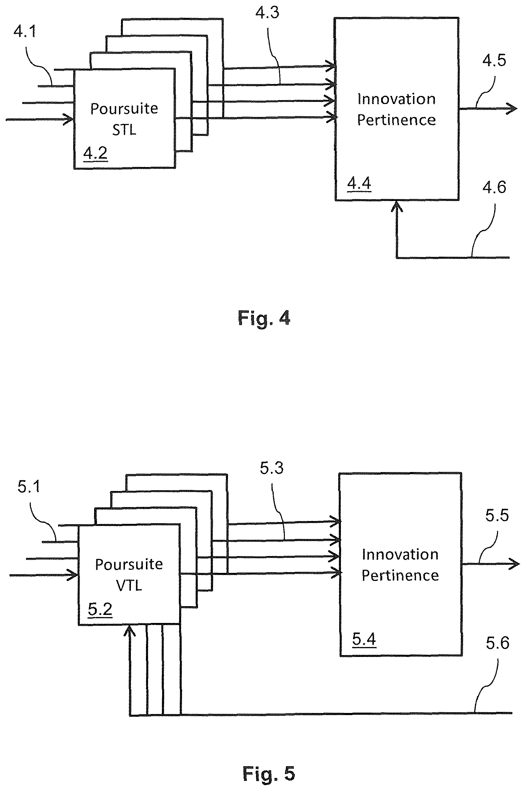

Les récepteurs conventionnels exploitent une poursuite dite scalaire des signaux émis par les satellites. Ce mode de poursuite est appelé STL (pour *Scalar Tracking Loop* en anglais). Il repose sur une architecture directe qui utilise des boucles de poursuite des signaux GNSS en amont du navigateur. Les boucles de poursuite, dont le nombre dépend du nombre de satellites disponibles, fonctionnent indépendamment les unes des autres, mais aussi indépendamment du navigateur. La **figure 4** illustre un estimateur basé sur des boucles de poursuite scalaires.

Les signaux numérisés **4.1** reçus du satellite sont traités par des boucles de poursuites scalaires **4.2**. Les boucles de poursuite scalaire produisent des estimées **4.3** des valeurs de délai $\tilde{\tau}^m$ et de fréquence $\tilde{f}^m$ ainsi qu'une mesure des valeurs efficaces de bruit affectant ces estimées, respectivement $\sigma_\tau^{S,m}$ et $\sigma_f^{S,m}$, l'exposant $S$ exprimant que la boucle est scalaire et m étant un indice du satellite concerné.

De son côté, le navigateur réalise des estimées sur la base de son modèle dynamique prenant en compte la totalité des signaux satellites reçus ainsi que les informations des éventuels capteurs complémentaires. Ces estimées **4.6** sont notées respectivement $\hat{\tau}^m$ pour le délai, $\hat{f}^m$ pour la fréquence doppler, $\sigma_\tau^{V,m}$ et $\sigma_f^{V,m}$ pour les valeurs efficaces de bruit associées.

Les estimées **4.3** issues des boucles de poursuite et les estimées **4.6** issues du navigateur sont envoyées à un module de calcul de l'innovation et de la pertinence **4.4**. On appelle innovation (ou résidu) la différence entre la mesure effectuée et la mesure estimée par le navigateur. L'amplitude de l'innovation (du résidu) d'une mesure permet d'établir un critère de pertinence de cette mesure. Lorsque cet écart n'est pas compatible avec les valeurs efficaces de bruit, on en déduit que la mesure est erronée, elle est alors déclarée non pertinente et ne sera pas transmise au navigateur. On dit aussi alors que le canal associé à ce satellite est contaminé. Les mesures pertinentes **4.5** sont alors transmises au navigateur pour la mise à jour de la position et de la vitesse du récepteur. Cette approche suppose que le navigateur n'est pas lui-même contaminé.

La caractéristique principale des estimateurs basés sur des boucles de poursuite scalaire est que l'estimation faite sur un canal, c'est-à-dire sur un signal satellite donné, est totalement indépendante des estimations faites sur les autres canaux. La boucle de poursuite propage des estimées qui ne dépendent que de l'estimation locale précédente du même canal, et des mesures produites par ce canal. En d'autres termes, l'estimée utilisée pour programmer les NCO pour la génération du signal réplique est directement le résultat précédent de la boucle de poursuite STL et des mesures obtenues localement. Par contre, de ce fait, l'estimation est sensible au bruit et perturbation affectant ce canal. En particulier dans le cas où le signal satellite est sujet à des multi-trajets, ces derniers peuvent générer des mesures contaminées pouvant affecter l'estimation de façon sensible. De même, l'approche scalaire montre ses limites lorsque le signal est de faible puissance. Le niveau de bruit augmente dégradant d'autant la précision de la mesure. Se pose également le problème du masquage temporaire d'un satellite. Dans ce cas, la réception du signal est interrompue conduisant à un décrochage de la boucle de poursuite scalaire. Lorsque le signal réapparaît, il est alors nécessaire d'acquérir à nouveau le satellite ce qui peut conduire à un temps plus ou moins long sans estimée valide.

Pour pallier ces inconvénients et principalement la faiblesse des boucles de poursuite scalaires lorsque le signal est de faible puissance des estimateurs basés sur des boucles vectorielles ont été proposés. L'architecture d'un estimateur basé sur des boucles vectorielles a été proposée. Elle est illustrée **figure 5.**

La principale différence avec la **figure 4** est que les boucles de poursuite **5.2,** ici vectorielles, qui prennent en entrée les signaux **5.1** reçus des satellites, prennent également en entrée les estimations **5.6** fournies par le navigateur. Les estimations **5.3** fournies par les boucles de poursuite sont ensuite transmises au module **5.4** qui calcule les innovations **5.5** qui sont transmises au navigateur. Le module **5.4** produit également des informations sur la qualité de ces innovations utilisées par le navigateur. Cette configuration du récepteur utilise des informations élaborées par le navigateur à partir de toutes les mesures dont il dispose, donc les mesures de tous les canaux du récepteur GNSS et, s'il y a lieu, les mesures issues de capteurs complémentaires, pour délivrer à chaque canal des informations qui sont utilisées, au sein des boucles de poursuite des signaux, pour la commande des oscillateurs contrôlés numériquement (NCO). Cette approche coopérative rend les canaux dépendants les uns des autres. Une analyse élémentaire met en évidence un inconvénient majeur de cette architecture. En rendant les canaux de poursuite dépendants les uns des autres, et dépendant éventuellement d'autres mesures, cette architecture subit une dégradation lorsque le navigateur ne sait pas écarter une mesure contaminée. On appelle mesure contaminée une mesure dont la consistance a été compromise parce que le signal était trop faible ou que des multi-trajets ont perturbé la mesure. Dans un environnement difficile tel qu'un environnement urbain, le risque de pollution entre canaux doit être envisagé, pouvant entraîner une divergence du navigateur rendant inexploitables les mesures réalisées par les boucles VTL. Pour cette raison, cette architecture n'est pas utilisée à ce jour pour adresser la problématique des multi-trajets en environnement urbain. Elle satisfait toutefois la contrainte de poursuite de signaux à faible puissance.

La qualité de la poursuite scalaire effectuée sur un seul canal, i. e. le bruit d'estimation de ce canal, est fonction des mesures locales dont il dispose et sujette au bruit affectant la réception de ce canal. De ce fait, la fenêtre de discrimination utilisée pour la poursuite scalaire, dont la taille dépend directement du bruit sur les estimées, donc du bruit affectant la mesure, doit être relativement grande. De ce fait, elle est sensible à la présence de multi-trajets dont le délai et la fréquence doppler propre font que le multi-trajet se trouve être présent dans la fenêtre de discrimination.

La poursuite vectorielle, du fait que l'estimée utilisée est celle du navigateur consolidée sur l'ensemble des canaux disponibles, est affectée d'un bruit plus réduit. La fenêtre de discrimination est donc plus réduite et de ce fait moins sensible à la présence de multi-trajets dont un plus grand nombre seront en dehors de cette fenêtre de discrimination. Par contre, du fait de la plus petite fenêtre de discrimination, la poursuite vectorielle est très sensible à l'exactitude de l'estimée du navigateur. En particulier, si des mesures contaminées viennent entacher l'estimation du navigateur, celui-ci produisant une estimée affectée d'une erreur supérieure à la fenêtre de discrimination, du fait de la propagation de ces mesures contaminées entre les canaux, la poursuite ne peut pas converger vers une mesure correcte. On dit alors que le navigateur est contaminé.

La présente invention a pour but de résoudre les inconvénients précités en proposant une architecture de récepteur de navigation utilisant en parallèle un estimateur basé sur une poursuite scalaire et un estimateur utilisant une poursuite vectorielle. Ainsi, il est possible de comparer les résultats donnés par les deux estimateurs. En cas de divergence entre les deux estimateurs, une étude des résidus qui représentent l'écart entre les estimées locales et les estimées du navigateur permet de déterminer une contamination de certains canaux scalaires, ou du navigateur, et de modifier les paramètres du navigateur pour conserver une mesure fiable de la position.

L'invention concerne un dispositif de positionnement par satellite, comprenant un module de réception radio et de numérisation des signaux reçus depuis les satellites, chaque signal reçu d'un satellite définissant un canal satellite ; un estimateur conçu pour déterminer une mesure de délai et de fréquence de chaque canal satellite ; un navigateur conçu pour déterminer à partir de l'ensemble des mesures de l'estimateur une estimation de position et de vitesse du dispositif. L'estimateur comprend pour chaque canal satellite : une boucle de poursuite scalaire de la mesure de délai de code ; une boucle de poursuite vectorielle de la mesure de délai de code en parallèle de la boucle scalaire ; et des moyens de comparaison des estimées de délai de la boucle de poursuite scalaire et de la boucle de poursuite vectorielle produites par les estimateurs desdites boucles scalaires et vectorielle fonctionnant en parallèle, pour la détermination de l'intégrité de la mesure de délai et donc du canal satellite concerné.

Selon un mode particulier de réalisation, lesdites boucles scalaires et vectorielles comprenant des oscillateurs contrôlés numériquement porteurs de l'estimée de délai desdites boucles, les moyens de comparaison des estimées de délai de la boucle de poursuite scalaire et de la boucle de poursuite vectorielle comprennent des moyens de comparaison de l'état desdits oscillateurs contrôlés numériquement.

Selon un mode particulier de réalisation, lesdites boucles scalaires et vectorielles comprenant des discriminateurs de délai, les moyens de comparaison des estimées de délai de la boucle de poursuite scalaire et de la boucle de poursuite vectorielle comprennent des moyens de comparaison des sorties desdits discrimina-

Selon un mode particulier de réalisation, l'estimateur comporte en outre des moyens de détermination de l'intégrité du navigateur à partir de la détermination de l'intégrité des mesures de délai de l'ensemble des canaux satellites.

Selon un mode particulier de réalisation, le navigateur comprend des moyens pour écarter les mesures issues de canaux satellites déterminés comme contaminés par l'estimateur.

Selon un mode particulier de réalisation, la boucle de poursuite vectorielle comprend un premier discriminateur, dits étroit, utilisant des corrélateurs dont le décalage est basé sur la puissance du bruit affectant l'estimation globale du navigateur; la boucle de poursuite vectorielle comprend en outre un second discriminateur, dits large, utilisant des corrélateurs dont le décalage est basé sur la puissance du bruit affectant l'estimation locale scalaire ; et des moyens de contrôle pour déterminer quel discriminateur est utilisé pour établir la mesure de délai de la boucle vectorielle.

L'invention concerne également un procédé de contrôle d'un dispositif de positionnement par satellite, comprenant un module de réception radio et de numérisation des signaux reçus depuis les satellites, chaque signal reçu d'un satellite définissant un canal satellite ; un estimateur pour déterminer une mesure de délai de code et de fréquence de chaque canal satellite et un navigateur pour déterminer à partir de l'ensemble des mesures de l'estimateur une estimation de position et de vitesse du dispositif ; l'estimateur comprenant pour chaque canal satellite : une boucle de poursuite scalaire de la mesure de délai ; une boucle de poursuite vectorielle de la mesure de délai en parallèle de la boucle scalaire . Le procédé comprend en outre une étape de comparaison des mesures de délai de la boucle de poursuite scalaire et de la boucle de poursuite vectorielle produites par les estimateurs desdites boucles scalaires et vectorielle fonctionnant en parallèle pour la détermination de l'intégrité de la mesure de délai et donc du canal satellite concerné.

Selon un mode particulier de réalisation, la boucle de poursuite vectorielle comprenant un premier discriminateur, dit large, utilisant des corrélateurs dont le décalage est basé sur la puissance du bruit affectant l'estimation locale scalaire ; la boucle de poursuite vectorielle comprenant en outre un second discriminateur, dit étroit, utilisant des corrélateurs dont le décalage est basé sur la puissance du bruit affectant l'estimation globale du navigateur ; le procédé comprend en outre : une étape pour déterminer quel discriminateur est utilisé pour établir la mesure de délai de la boucle vectorielle.

Selon un mode particulier de réalisation, le procédé comprend : une étape d'acquisition des satellites ; une étape de basculement dans un mode scalaire lorsqu'un nombre suffisant de satellite est acquis, la mesure de l'estimateur étant alors produite par la boucle scalaire ; une étape de basculement dans un mode vectoriel dégradé lorsque le navigateur a pu converger vers une estimation de position et de vitesse, la mesure de l'estimateur étant alors produite par la boucle vectorielle sur la base du discriminateur large, la boucle scalaire étant poursuivie en parallèle ; une première étape de basculement dans un mode de transition, la mesure de l'estimateur étant alors produite par la boucle vectorielle sur la base du discriminateur large et du discriminateur étroit, la boucle scalaire étant poursuivie en parallèle ; une étape de basculement dans un mode vectoriel sain lorsque l'état du navigateur est déterminé comme sain par comparaison des mesures de la boucle scalaire et de la boucle vectorielle, la mesure de l'estimateur étant alors produite par la boucle vectorielle sur la base du discriminateur étroit, la boucle scalaire étant poursuivie en parallèle ; et une seconde étape de basculement dans le mode de transition lorsque l'état du navigateur est déterminé comme contaminé par comparaison des mesures de la boucle scalaire et de la boucle vectorielle .

L'invention concerne également un programme d'ordinateur comprenant des instructions adaptées à la mise en œuvre de chacune des étapes du procédé selon l'invention lorsque ledit programme est exécuté sur le dispositif de positionnement par satellite selon l'invention.

L'invention concerne également un moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'invention, lorsque ledit programme est exécuté sur un dispositif de positionnement par satellite selon l'invention.

Dans un mode particulier de réalisation, des étapes du procédé précité sont déterminées par des instructions de programmes d'ordinateurs.

En conséquence, l'invention vise aussi un programme d'ordinateur sur un support d'informations, ce programme étant susceptible d'être mis en œuvre par un microprocesseur, ce programme comprenant des instructions adaptées à la mise en œuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un microprocesseur, et comprenant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

Le support d'informations et le programme d'ordinateur précités présentent des caractéristiques et avantages analogues au procédé qu'ils mettent en œuvre.

D'autres particularités et avantages de l'invention apparaîtront encore dans la description ci-après en relation avec les dessins annexés, donnés à titre d'exemples non limitatifs :

la **figure 1** illustre la transmission d'un signal entre un satellite et un récepteur de navigation ;
la **figure 2** illustre l'architecture générale d'un récepteur de navigation par satellite ;
la **figure 3** illustre le concept de fenêtre de discrimination délai-fréquence ;
la **figure 4** illustre le fonctionnement d'une boucle de poursuite STL ;
la **figure 5** illustre le fonctionnement d'une boucle de poursuite VTL ;
la **figure 6** illustre l'architecture d'un récepteur selon un mode de réalisation de l'invention ;
la **figure 7** illustre l'architecture des dispositifs de mesure de délai selon un mode de réalisation de l'invention ;
la **figure 8** illustre les différentes étapes du contrôle selon un mode de réalisation de l'invention ;
la **figure 9** illustre l'impact des multi-trajets sur la mesure de délai en lien avec la fenêtre de discrimination délai-fréquence ;
la **figure 10** est un bloc-diagramme schématique d'un dispositif de traitement de l'information pour la mise en œuvre d'un ou plusieurs modes de réalisation de l'invention.

L'idée de base de l'invention consiste à utiliser conjointement en parallèle une boucle de poursuite STL et une boucle de poursuite VTL pour l'estimation du délai de chaque mesure satellite. Le mode de poursuite de la phase est indifférent à l'invention, il peut être de type STL, ou VTL selon les modes de réalisation. Toutefois l'implantation de cette boucle peut bénéficier d'une aide du navigateur, en particulier lorsque celui-ci bénéficie d'aide en vitesse (Centrale inertielle, mesures différentielles produites par un baromètre, un odomètre mécanique ou optique, ...). La qualité de cette aide impacte la dimension de la fenêtre de discrimination dans la dimension verticale (fréquence).

Cette mise en parallèle d'une boucle STL et d'une boucle VTL permet de confronter les innovations obtenues pour chacune d'elle en comparant l'état des NCOs des 2 boucles. Cette comparaison permet à tout instant de déterminer quels sont les canaux sains et ceux qui sont contaminés. Il est également possible de déterminer si le navigateur est sain ou contaminé, et d'évaluer le niveau de contamination du navigateur. De ce fait, il devient possible d'implémenter un contrôle tirant parti de cette information pour écarter, lorsque cela est possible, les canaux contaminés pour conserver un navigateur sain. Il est également possible d'implémenter un contrôle permettant de ramener le navigateur dans un état sain lorsqu'il devient contaminé.

Avantageusement, les boucles STL et VTL utilisées pour la poursuite du délai sont basées sur des architectures similaires de façon à augmenter la pertinence de la comparaison des signaux en sortie des discriminateurs. De plus cette approche permet de bénéficier du filtrage des mesures réalisées entre 2 mises à jour du navigateur par les boucles de poursuite pour construire à l'entrée du navigateur des innovations utilisées pour le contrôle de l'intégrité des mesures et du navigateur affectées d'un niveau de bruit très bas.

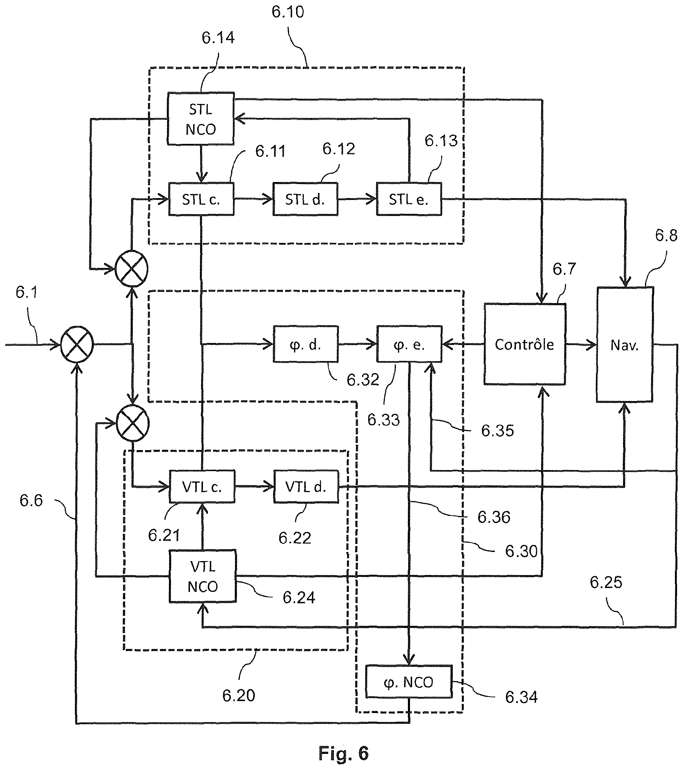

La **figure 6** illustre l'architecture d'un récepteur selon un mode de réalisation de l'invention. Le signal **6.1** reçu du satellite est soumis dans cet exemple à trois estimateurs distincts. Cette figure illustre le traitement d'un canal particulier. Un canal étant la chaine de traitement des signaux d'un satellite. Il existe donc autant de chaines de traitement que de signaux satellite capturés par le récepteur. Sur la figure, seul le bloc de contrôle **6.7** et le navigateur **6.8** sont communs à l'ensemble des canaux.

Un premier estimateur **6.30** est dédié à la poursuite de la porteuse du signal, il s'agit ici de poursuivre la fréquence via la phase. Le signal reçu est mélangé avec le signal de porteuse **6.6** produit par le bloc de NCO **6.34** et soumis à un corrélateur, typiquement le corrélateur *prompt* du module STL **6.11** ou VTL **6.21**. Le résultat de corrélation est alors soumis à un bloc de discriminateurs **6.32** permettant la mesure des erreurs de phase et de fréquence. La sortie des discriminateurs **6.32** est alors traitée par un bloc d'estimation **6.33** pour l'estimation de la fréquence mesurée du signal d'entrée. C'est cette estimation locale **6.36** qui sert à contrôler le signal réplique de porteuse via le bloc de NCO **6.34**. On retrouve donc ici la structure classique d'une boucle STL pour la poursuite de la porteuse du signal.

Dans un mode de réalisation, l'estimation de la fréquence de la porteuse **6.35** effectuée par le navigateur **6.8** est également utilisée par l'estimateur local **6.33**. On a dans ce cas une boucle STL dite aidée. L'estimation du navigateur sert à affiner l'estimation locale. La boucle reste bien une boucle scalaire du fait que la programmation des NCO **6.34** est bien faite à partir de l'estimation locale et pas à partir de l'estimation du navigateur.

Dans le contexte de l'invention, la poursuite phase-fréquence peut être faite indifféremment par une boucle de poursuite STL, STL aidée, exploiter les sorties du corrélateur prompt associé à la boucle STL, ou celui associé à la boucle VTL. Toutefois, selon un mode particulier de l'invention, le module de contrôle **6.7,** dont le fonctionnement sera détaillé plus loin, peut être utilisé pour basculer entre un mode STL pur et un mode STL aidé, et sélectionner le corrélateur prompt le plus approprié, en fonction d'informations sur l'intégrité du navigateur.

Un second estimateur **6.10** est implémenté pour l'estimation du délai. Cet estimateur est une boucle de poursuite scalaire, de type STL donc. On retrouve les éléments classiques d'une telle boucle de poursuite. Un bloc de corrélation **6.11** pour établir la corrélation entre le signal reçu et le signal réplique généré par le bloc de NCO **6.14.** Le résultat de la corrélation est soumis à un bloc de discriminateurs **6.12** pour l'estimation des écarts de délai, le discriminateur de délai mesurant le résidu sur le délai utilisé pour l'asservissement d'une boucle scalaire. Ensuite, le bloc d'estimation **6.13** est chargé de produire la fréquence qui contrôle le bloc NCO **6.14.** Ce bloc porte l'information du délai résultant. La boucle est scalaire, c'est donc cette estimée de fréquence locale produite par le bloc d'estimation **6.13** qui sert à programmer le bloc NCO **6.14.** Ce NCO porte ainsi l'état estimé qui représente la mesure de délai estimée.

L'un des aspects innovants de l'architecture proposée est de mettre cet estimateur scalaire **6.10** en parallèle d'un autre estimateur **6.20** vectoriel, utilisé pour sa précision permettant une réduction de la plage de la fenêtre de discrimination. Cet estimateur VTL comporte un générateur **6.24** de signal réplique basé sur des NCO, pendant du générateur NCO scalaire **6.14,** un bloc de corrélation **6.21** et un bloc de discriminateurs **6.22,** l'ensemble de discriminateurs de délai mesurant les résidus sur les délais utilisés pour l'asservissement de la boucle vectorielle. La boucle de poursuite étant vectorielle, l'estimateur local disparaît au profit du navigateur **6.8.** C'est en effet ce dernier qui est chargé de produire, à partir des mesures de délai obtenues par une lecture de l'état des NCOs **6.24** et de la sortie des discriminateurs **6.22** de tous les canaux, l'estimée de la fréquence de contrôle du NCO qui produit le délai du canal. A la différence de l'estimateur local **6.13** de la boucle scalaire, l'estimation faite par le navigateur utilise l'ensemble des mesures disponibles pour produire son estimation. Ces mesures sont issues de l'ensemble des canaux GNSS disponibles plus éventuellement d'autres systèmes tels que des centrales inertielles, des baro-altimètres, des odomètres ou autres. Cette estimée **6.25** de la fréquence du NCO qui contrôle le délai du canal concerné, établie à partir de l'ensemble des canaux disponibles par le navigateur, sert à la programmation du générateur de signal réplique **6.24.**

Un autre aspect innovant de l'architecture proposée est le module de contrôle **6.7.** Ce module utilise les mesures du rapport signal à bruit de chaque canal et réalise une comparaison des innovations (résidus) élaborés, pour chaque canal, en comparant l'état du NCO **6.14** de la boucle scalaire à l'état du NCO **6.24** de la boucle vectorielle. Cette comparaison est pertinente et permet d'améliorer la puissance des tests réalisés pour détecter les canaux sains et les canaux contaminés. Il est aussi possible de vérifier également l'intégrité du navigateur à partir d'une analyse globale de ces mêmes résidus. Ce module de contrôle est alors à même de piloter les boucles scalaires et vectorielles en fonction de ces éléments, d'écarter des canaux contaminés et de ramener un navigateur contaminé dans un mode sain comme nous le verrons plus loin.

Alternativement, selon un autre mode de réalisation non représenté sur la **Figure 6,** la comparaison des estimées de délai des boucles scalaire et vectorielle, peut être réalisée en comparant les sorties des discriminateurs **6.12** et **6.22** desdites boucles en lieu et place de la comparaison des états des NCOs.

La corrélation du signal réplique avec le signal reçu est en pratique réalisée par une pluralité de corrélateurs. Cette corrélation utilise au moins deux corrélateurs. Un premier corrélateur établit la corrélation entre le signal reçu et une version en avance du signal réplique généré. Ce corrélateur est alors qualifié de corrélateur *early* (traduction anglaise de « en avance »). Un second corrélateur établit la corrélation entre le signal reçu et une version en retard du signal réplique généré. Ce corrélateur est alors qualifié de corrélateur *late* (traduction anglaise de « en retard »). De plus, un corrélateur supplémentaire établit la corrélation entre le signal reçu et une version sans décalage du signal réplique généré. Ce corrélateur est qualifié de corrélateur *prompt* (traduction anglaise de « sans délai »).

En pratique la mesure de délai est réalisée sur une fenêtre de discrimination qui dépend, dans le domaine du délai, des valeurs de décalage utilisées pour les corrélateurs *early* et *late.* L'utilisation de valeurs de décalage importantes entre les signaux *early* et les signaux *late* conduit à une fenêtre de discrimination délai-fréquence large sur l'axe du délai. Au contraire, des valeurs de décalage petites entre les signaux *early* et les signaux *late* permettent une fenêtre de discrimination délai-fréquence étroite. Pour produire des fenêtres de discrimination étroites ayant de bonnes performances il est à noter, s'agissant de signaux BPSK tel que celui défini pour le système GPS/L1 C/A, qu'il est nécessaire d'utiliser des corrélateurs avance et retard pour plusieurs valeurs du décalage. Par contre s'agissant de signaux BOC(m,n) tels que ceux utilisés pour les signaux GNSS large bande des systèmes de nouvelle génération, la mise en œuvre de discriminateurs larges peut nécessiter un traitement particulier des signaux BOC.

S'agissant de la dimension fréquence, celle-ci est définie par la bande de bruit de l'estimateur utilisé par la boucle de poursuite de la fréquence. Cette bande de bruit peut être réduite en utilisant une horloge de qualité pour le récepteur et/ou une aide du navigateur, surtout lorsque celui-ci bénéficie de mesures de vitesse (centrale inertielle, mesure de pression différentielle, odomètre mécanique ou optique).

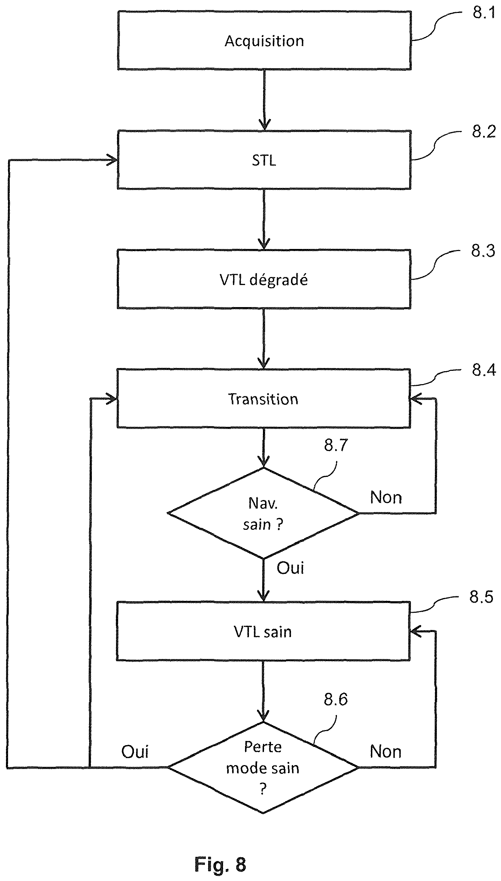

Dans la suite du document, on parlera de fenêtre de discrimination délai-fréquence large lorsque sa dimension dans le domaine du délai est basée sur la puissance du bruit de l'estimation locale de délai et de l'amplitude des éventuelles perturbations. On parlera de fenêtre de discrimination délai-fréquence étroite, lorsque sa dimension dans le domaine du délai est basée sur la puissance du bruit de l'estimation globale faite par le navigateur, la dimension de cette fenêtre fixant les performances que pourra atteindre le récepteur. En pratique la fenêtre de discrimination étroite est utilisée par la boucle VTL dans son mode nominal (mode **8.5** de la **figure 8**). Sa largeur peut être ajustée dynamiquement en fonction de la puissance du bruit sur le délai estimé par la boucle vectorielle. La fenêtre de discrimination large est utilisée dans le mode de transition (mode **8.4** de la **figure 8**) et le mode VTL dégradé (mode **8.3** de la **figure 8**). Elle accepte des perturbations des boucles réduisant le risque de décrochage.

La sensibilité de la mesure du délai aux multitrajets est directement liée à la taille de cette fenêtre de discrimination délai-fréquence. La **figure 9** illustre l'impact d'un trajet indirect sur la mesure effectuée par les corrélateurs.

Nous avons vu qu'un signal indirect, dit signal NLOS, est reçu par le récepteur affecté d'un délai différent du délai affectant le signal direct, dit signal LOS. Ceci est dû au fait que les deux signaux ont effectués des trajets de longueur différente.

Un signal indirect ayant une différence de délai avec le signal direct supérieure à la largeur de la fenêtre de discrimination délai-fréquence ne perturbe pas la mesure. On dit que le signal indirect tombe en dehors de la fenêtre de discrimination. Sur la **figure 9,** le point **9.2** illustre le trajet direct ou LOS dont on cherche à mesurer le délai. Le point **9.3** illustre l'estimation utilisée par la boucle, c'est-à-dire le signal réplique affecté de son délai et de sa fréquence. Ce point est le point central de la fenêtre de discrimination délai-fréquence **9.1,** dans le mode VTL lorsque le navigateur n'est pas contaminé. Le point **9.5** illustre un trajet indirect tombant en dehors de la fenêtre de discrimination délai-fréquence. Ce signal ne perturbe pas la mesure faite par les corrélateurs correspondant à la fenêtre de discrimination délai-fréquence illustrée.

Au contraire, un signal indirect illustré par le point **9.4** tombe dans la fenêtre de discrimination **9.1**. La corrélation va dans ce cas comparer le signal réplique avec la somme du signal **9.2** résultant du trajet direct et le signal indirect **9.4**. La boucle de poursuite converge alors vers une position intermédiaire entre les points **9.2** et **9.4**. Le délai mesuré est affecté d'une erreur due à la présence du trajet indirect **9.4** dans la fenêtre de discrimination.

On comprend dès lors qu'une des clés pour réduire l'impact des multi-trajets est la taille de la fenêtre de discrimination délai-fréquence. Par exemple, une fenêtre **9.6** plus réduite, en écartant le signal **9.4,** aurait permis une mesure saine du délai du signal **9.2** au contraire de la fenêtre de discrimination délai-fréquence **9.1** qui conduit à une mesure contaminée par le signal **9.4**. Toutefois, comme nous l'avons vu, la taille de la fenêtre de discrimination délai-fréquence est liée au niveau de bruit affectant l'estimée utilisée pour générer le signal réplique. En effet, l'utilisation d'une fenêtre de discrimination trop petite fait courir le risque de ne pas contenir le signal direct que l'on cherche à mesurer et dans ce cas aucune mesure n'est possible.

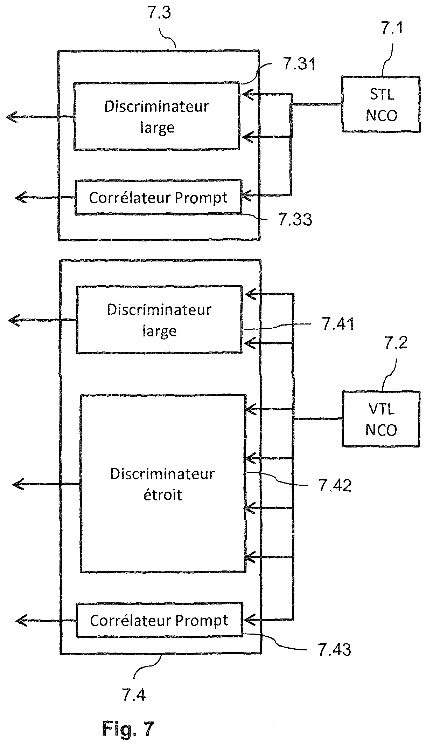

La **figure 7** illustre l'architecture des dispositifs de mesure de délai selon un mode de réalisation de l'invention.

Dans le mode de réalisation de la **figure 7,** la boucle STL **7.3** utilise un discriminateur classique basé sur la sortie d'un corrélateur *early* et d'un corrélateur *late* permettant de réaliser un discriminateur **7.31** opérant sur une fenêtre de discrimination large. Ces corrélateurs prennent en entrée le signal réplique généré par le bloc de NCOs **7.1** et le signal reçu non représenté. Comme nous l'avons vu, les boucles de poursuite STL sont affectées d'un niveau de bruit relativement élevé. Par ailleurs elles sont utilisées pour l'élaboration de signaux de test et doivent être capables d'accepter des perturbations. De ce fait, le discriminateur large du bloc de corrélation STL (et VTL) est un discriminateur large défini par des corrélateurs avec des valeurs de décalage relativement grandes, assurant la robustesse de la boucle STL et la validité des tests en environnement perturbé, basées sur la puissance du bruit de l'estimation locale scalaire. La fenêtre de discrimination délai-fréquence associée est donc qualifiée de large.

La boucle VTL **7.4** comprend un discriminateur étroit **7.42** défini par des corrélateurs dits étroits avec des valeurs de décalage relativement faibles. Le choix de la largeur de la fenêtre de discrimination dépend alors de la précision de l'estimée du navigateur utilisée par la boucle VTL et donc de la puissance du bruit affectant cette estimée. L'utilisation de systèmes auxiliaires comme une centrale inertielle, le choix d'une fréquence d'échantillonnage élevée du signal **2.6,** l'utilisation d'oscillateur de bonne qualité, peut conduire à une fenêtre de discrimination délai-fréquence très étroite. La boucle de poursuite vectorielle basée sur ces corrélateurs étroits formant un discriminateur étroit est qualifiée en conséquence de boucle de poursuite vectorielle étroite. Ces corrélateurs prennent en entrée le signal réplique généré par le bloc de NCOs **7.2** et le signal reçu non représenté.

De manière optionnelle et innovante par rapport aux boucles vectorielles connues, la boucle vectorielle est également dotée d'un discriminateur large **7.41,** équivalent à celui utilisé par la boucle scalaire, qui peut résulter d'une reconfiguration du discriminateur étroit lorsque le mode sain **8.5** ne peut être maintenu. Ce discriminateur est utilisé dans les modes **8.3** et **8.4** pour la poursuite VTL en mode dégradé, qualifiée de boucle de poursuite vectorielle large. Cette boucle est tout de même une boucle de poursuite vectorielle car elle utilise en entrée le signal réplique issu du bloc NCO **7.2** généré à partir de l'estimation du navigateur au contraire de la boucle scalaire qui utilise le signal réplique issu du bloc NCO **7.1** généré à partir de l'estimation locale.

Dans un environnement générateur de multitrajet, un récepteur utilisant une poursuite scalaire va être très sensible aux perturbations introduites par ces multitrajets. En effet, nous l'avons vu, les boucles de poursuite scalaires utilisent nécessairement une fenêtre de discrimination délai-fréquence large qui sera susceptible de comprendre nombre de signaux indirects. De ce fait, les canaux de poursuite tendent à devenir contaminés. Tant que le navigateur est sain, il est possible de déterminer les canaux contaminés par une comparaison de la mesure issue de l'estimateur local de la boucle de poursuite scalaire et l'estimation fournie par le navigateur. Une différence importante, c'est-à-dire supérieure à l'incertitude introduite par le bruit, signale un canal contaminé.

Le navigateur écarte alors les mesures produites par ces canaux pour générer son estimation. Cette approche n'est pas satisfaisante pour les raisons suivantes. D'une part, la mesure scalaire et l'estimée du navigateur ne sont pas synchrones dans le temps. L'estimée du navigateur étant faite à partir des mesures des boucles scalaires précédemment estimées, un biais temporel est introduit dans la comparaison à un même instant de la mesure scalaire et de l'estimée du navigateur. Ce biais vient dégrader la précision de la comparaison si les modèles d'état des estimateurs ne sont pas adaptés à la dynamique du véhicule. Enfin les boucles scalaires sont plus sensibles aux multi-trajets, la dimension de la fenêtre de discrimination étant limitée par la puissance du bruit d'estimation de la boucle STL. Il arrive donc un moment où l'exclusion d'une mesure contaminée échoue, ou qu'il ne reste plus de canaux sains en nombre suffisant. L'intégrité du navigateur ne peut être garantie. Les mécanismes d'exclusion basés sur l'analyse du résidu ne sont plus pertinents.

Dans ce même environnement, un récepteur utilisant une simple poursuite vectorielle va être moins sensible aux perturbations introduites par les multi-trajets. La détection des canaux contaminés se fait toujours en comparant la mesure du canal avec l'estimée produite par le navigateur. Cette information est directement disponible en sortie des discriminateurs dans une architecture centralisée. Tant que le navigateur est sain, la comparaison tend à être nulle au bruit près. L'avantage de cette approche est que l'utilisation de fenêtre de discrimination étroite rend la mesure du canal beaucoup moins sensible aux multi-trajets, les signaux indirects tombant plus facilement en dehors de la fenêtre de discrimination. L'inconvénient de l'approche est que le test portant sur la sortie du discriminateur est peu performant, en raison du niveau de bruit qui affecte ce signal. Une amélioration du test nécessite d'adapter le temps de corrélation pour atteindre le niveau de rapport signal à bruit souhaité, ce temps de corrélation pouvant devenir rédhibitoire en cas de phénomènes instationnaires. De plus le test suppose que l'état du véhicule est parfaitement décrit par le NCO de la boucle vectorielle, ce qui n'est vrai qu'en l'absence d'accélération du véhicule. Par ailleurs l'utilisation du signal de sortie du discriminateur suppose que la perturbation est mesurable par le discriminateur dont la plage de discrimination est de largeur limitée. Enfin cette approche est très sensible à la contamination du navigateur. En effet, si des canaux contaminés arrivent à dégrader l'estimation du navigateur, l'utilisation de fenêtres de corrélation étroites conduit facilement à avoir une fenêtre qui ne contient plus le trajet direct. Dans ce cas, la mesure ne converge plus. De plus, la mesure vectorielle est plus sensible aux perturbations que la mesure scalaire. En effet, la mesure scalaire ne dépendant que du canal mesuré ne subit pas les perturbations des autres canaux et la puissance du bruit de la mesure dépend de la qualité du signal et de la bande de bruit de l'estimateur STL. Au contraire, la mesure vectorielle, faite à partir de l'estimée du navigateur agrégeant l'ensemble des canaux, est affectée par des perturbations au sein des autres canaux.

L'un des aspects innovants de l'invention réside dans la possibilité offerte par l'architecture de délivrer à tout moment les mesures de délai obtenues dans les modes scalaire et vectoriel, rendant possible pour chaque canal l'exploitation par le navigateur de la mesure de délai la plus pertinente. Elle permet par ailleurs de mesurer les différences entre les estimées de délai scalaires et vectorielles, portées par les NCOs des 2 boucles. Au contraire des mesures faites entre l'estimée du navigateur et la mesure d'une boucle de poursuite, scalaire ou vectorielle, ces mesures entre les deux types de boucles permettent une comparaison plus pertinente. Elles représentent l'écart entre l'estimée de délai obtenue localement et celui obtenu à partir du navigateur, comme pour un récepteur basé sur une architecture STL, mais sont élaborées à partir des mêmes échantillons du signal.

En effet, la symétrie de fonctionnement entre les deux types de boucles, lorsqu'elles sont mises en parallèle, a pour effet qu'il n'y a aucun biais temporel entre les deux mesures. Elles sont parfaitement synchrones dans le temps. Ce premier point améliore la pertinence de la mesure en comparaison avec l'approche STL. Par ailleurs, les mesures des innovations réalisées en comparant le délai estimé en mode scalaire à celui obtenu en mode vectoriel bénéficie du filtrage opéré par ces 2 estimateurs. La puissance du bruit sur ce signal est donc plus faible que celle du bruit qui affecte le discriminateur de la boucle VTL.

L'architecture proposée permet donc, en comparaison avec l'art antérieur, d'élaborer une mesure des innovations (résidus) sur les délais à l'aide de mesures plus pertinentes et affectées d'un niveau de bruit moindre, facilitant la détermination des canaux sains et des canaux contaminés et l'analyse de l'intégrité du navigateur. De plus, lorsque ces mesures détectent un fonctionnement contaminé du navigateur, une reconfiguration du récepteur est toujours possible. Une forte contamination du navigateur conduisant à des innovations incompatibles avec la largeur des fenêtres de discriminations nécessite de basculer le récepteur dans le mode STL (mode **8.2** sur la **figure 8**). De manière plus probable, en présence de satellites visibles et lorsque les tests réalisés évitent une forte dégradation du navigateur, le récepteur peut être placé dans un mode dégradé (mode **8.4** sur la **figure 8**) où les boucles VTL fonctionnent sur des fenêtres de corrélation plus large est toujours possible. Dans ce mode le système de contrôle bénéficie des mêmes mesures des innovations, celles qui résultent de la comparaison des états des NCOs des boucles STL et VTL. Elles sont utilisées pour ramener le navigateur dans le mode de fonctionnement intègre (mode **8.5** sur la **figure 8**).

La **figure 8** illustre les différentes étapes du contrôle selon un mode de réalisation de l'invention.

Lors d'une première étape **8.1**, le récepteur ne dispose d'aucune information à priori sur sa position et sa vitesse. Il procède alors à une étape d'acquisition des satellites visant à acquérir une première estimation de sa position. Lors de cette étape, le manque d'estimation de position et de vitesse ne permet pas l'utilisation des boucles de poursuite, que ce soit scalaire ou vectorielle, qui dépendent d'une première estimation pour fonctionner. Au moins quatre satellites doivent alors être visibles. Cette étape est bien connue de l'homme du métier et n'est pas détaillée ici.

Une fois acquises ces premières estimations, le récepteur passe alors dans un mode de fonctionnement **8.2** scalaire. C'est le mode de fonctionnement d'un récepteur scalaire classique. Chaque satellite est poursuivi par une boucle de poursuite scalaire qui élabore des mesures locales. Ces mesures locales sont utilisées par le navigateur qui produit alors une position saine si les mesures sont saines et entachée d'erreur dans le cas contraire. Dans ce mode, les boucles de poursuite vectorielles ne sont pas utilisées. Cette phase doit permettre d'acquérir plus de 4 satellites.

Lorsque le navigateur a pu converger vers une estimation de position et de vitesse, il bascule alors dans un mode **8.3** dit mode VTL dégradé. Dans ce mode, le récepteur utilise le discriminateur large de la boucle VTL. Il n'utilise pas encore le discriminateur étroit. Les mesures données par les boucles VTL larges (4 ou 5 satellites en sortie de **8.2**) sont utilisées par le navigateur pour construire son estimation. L'intégrité du navigateur dépend alors de la contamination des canaux utilisés. La poursuite vectorielle et scalaire des autres satellites, jugés disponibles d'après leurs éphémérides, est réalisée. Les satellites dont le signal est masqué nécessitent une boucle scalaire aidée par la boucle vectorielle, jusqu'à atteindre un niveau de rapport signal à bruit suffisant, supérieur à un seuil donné dans la pratique. Le choix des satellites est fait en fonction du niveau de rapport signal en bruit.

Le navigateur bascule alors dans un mode **8.4** dit mode de transition. Il s'agit ici d'évoluer vers un fonctionnement sain du navigateur. Dans ce mode de transition la poursuite des signaux est réalisée en mode vectoriel, et en parallèle en mode scalaire, sur la base de discriminateurs larges. En pratique la détection d'une mesure erronée affectant l'intégrité de la solution porte sur une analyse statistique des résidus. Lorsque le critère d'intégrité n'est pas satisfait une exclusion des satellites contaminés est nécessaire. De nombreuses approches ont été proposées pour contrôler l'intégrité du navigateur. Ces approches utilisent les mesures redondantes pour vérifier la consistance des mesures produites. L'homme du métier peut adopter l'approche qui lui parait la plus intéressante en bénéficiant des résidus qui sont ici avantageusement issus de la comparaison des estimées de délai produites par les boucles STL et VTL.

Lorsqu'un défaut d'intégrité est détecté une procédure d'exclusion est réalisée. Elle consiste à sélectionner M satellites sains. Pour information le nombre de combinaisons de M satellites parmi N est $C_N^M = \frac{N!}{M!\,(N-M)!}$. Pour N=6 et M=5 on a 6 combinaisons. Pour cette étape qui consiste à exclure les satellites contaminés l'homme du métier peut adopter la solution qui lui parait la plus pertinente. Le choix des M satellites peut consister, par exemple, à comparer la solution de navigation obtenue à partir des N satellites disponibles à celle obtenue à partir de plusieurs ensembles de M satellites. L'algorithme des moindres carrés pondérés est utilisé ici. La solution retenue (celle de l'ensemble de M satellites qui donne la position la plus proche de celle obtenue avec les N satellites) est testée en utilisant une analyse statistique des résidus sur les mesures de délai, obtenus lorsque les canaux VTL sont contrôlés par le navigateur exploitant cette solution. Ces résidus sont ici aussi avantageusement issus de la comparaison des estimées de délai produites par les boucles STL et VTL.

Nous proposons dans ce document de décrire, pour exemple, la méthode dite RCM (*Range comparison approach* en anglais) dont le principe est le suivant :
Les canaux satisfaisant un niveau de rapport signal à bruit, sont classés par ordre de pertinence, en fonction du niveau de bruit en sortie du discriminateur de phase et éventuellement d'une mesure de la distorsion de la fonction d'autocorrélation utilisant les différents corrélateurs disponibles. Cette phase permet de ne garder qu'un nombre limité de satellites (N=6 par exemple).

Des ensembles pertinents de 5 satellites sont sélectionnés. Pour chaque ensemble de 5 satellites on réalise les étapes suivantes :

◦ La position et le biais d'horloge du récepteur sont estimés en utilisant les mesures délivrées par la boucle vectorielle basée sur un discriminateur large.

L'algorithme des moindres carrés est utilisé.

∘ La mesure du délai des satellites pertinents écartés de l'ensemble est estimée à partir de la solution (position, biais d'horloge) obtenue.

∘ Pour chacun de ces satellites la mesure de délai estimée est comparée à la mesure délivrée par la boucle VTL.

• Les ensembles de satellites contenant un satellite contaminé donne des mesures de délai incohérentes. Cela permet de décider des satellites à écarter.

• Un ensemble de 5 satellites délivrant une mesure jugée saine est utilisé pour contrôler les NCOs de la boucle vectorielle.

• Une analyse des résidus obtenus par comparaison des états des NCO des boucles STL et VTL des 5 canaux sélectionnés est réalisée.

• Le récepteur est ramené dans un mode sain **8.5** lorsque la somme quadratique des résidus reste inférieure à un seuil qui est fixé en fonction de la qualité du signal.

• Dans le mode sain le navigateur peut utiliser d'autres canaux, le discriminateur étroit permettant de s'affranchir d'erreurs de mesure dues à des multi-trajets lointains.

On ne pourra revenir vers le mode VTL sain **8.5** que si le navigateur est intègre.

Lorsque le navigateur est déterminé comme sain, on peut alors basculer dans un mode **8.5** dit mode VTL sain. Dans ce mode, le discriminateur étroit est utilisé pour les boucles vectorielles. La poursuite des canaux par les boucles scalaires est également réalisée, du moins pour les canaux dont le rapport signal à bruit est supérieur à un seuil donné. On continue également la comparaison des estimées scalaires et vectorielles (états des NCOs) de manière à pouvoir détecter, lors de l'étape **8.5** la présence de multi-trajets, et mesurer lors de l'étape **8.6** le niveau de contamination du navigateur.

La démarche est la suivante. On commence par un test sur les résidus permettant de détecter des canaux affectés par des multi-trajets. En pratique la présence d'un multi-trajet conduit à une erreur sur la boucle vectorielle fonctionnant en mode sain si l'amplitude du multi-trajet est telle qu'il entre dans la fenêtre de discrimination. Dans ce cas on considère que l'impact de ce multi-trajet n'impacte pas de manière significative le récepteur. Toutefois on peut décider d'écarter cette mesure si le GDOP (*Geometry Dilution of Precision* en anglais) obtenu avec les mesures non contaminées est satisfaisant. On peut la conserver dans le cas contraire. En effet on peut espérer que cette mesure est en dehors de la plage de discrimination étroite.

Parallèlement à ceci on réalise un contrôle de l'intégrité du récepteur. Une mesure de la puissance cumulée des signaux, réalisée en sortie des corrélateurs prompt des boucles VTL, et des boucles STL peut être utilisée. En cas de contamination du navigateur le corrélateur prompt de la boucle VTL n'est plus calé sur le pic de corrélation du signal. Le niveau de puissance est alors affecté quel que soit le canal, conduisant à une diminution de la puissance cumulée, en comparaison à la puissance cumulée obtenue en sortie de boucle STL. Ceci est particulièrement vrai lorsque des signaux BOC (*Binary Offset of Carrier* en anglais) large bande, caractérisés par une fonction d'autocorrélation étroite, sont adressés.

Dès que la perte du statut sain du navigateur est détectée une mesure des résidus obtenus par comparaison des états des NCOs des boucles scalaire et vectorielle est réalisée. Les canaux tels que le résidu est tel qu'il permet l'utilisation du discriminateur large sont exploités en mode de transition **8.4**. Les canaux qui ne peuvent fonctionner en mode VTL, car ces boucles n'opèrent plus dans la plage de discrimination, sont placés en mode STL **8.2**. Le récepteur ne pourra revenir dans le mode VTL sain **8.5** que lorsque le nombre de satellites opérant est suffisant pour ramener le récepteur dans un mode sain.

Lors de l'éventuelle perte du statut sain du navigateur, le contrôle boucle sur l'état de transition **8.4** visant à récupérer ce statut. La perte d'intégrité du navigateur peut être due à un affaiblissement des signaux satellites par exemple ou à des masquages de satellite, ou à un défaut d'exclusion d'une mesure contaminée.

Selon un mode de réalisation avantageux, en cas de masquage d'un satellite, le décrochage de la boucle scalaire associée est empêchée en fournissant temporairement l'estimée du navigateur en entrée de la boucle, c'est-à-dire en entrée du générateur de signal réplique. De cette façon, la boucle STL peut poursuivre à nouveau le satellite dès que le masquage s'interrompt. Il en résulte une amélioration de la disponibilité.

Un récepteur basé sur l'architecture proposée et bénéficiant du mode de contrôle décrit permet donc de bénéficier de la robustesse du suivi du mode scalaire avec sa fenêtre de discrimination délai-fréquence large. Le discriminateur scalaire, associé au discriminateur large permet une élaboration de résidus facilitant la détection de mesures contaminées, et d'une contamination du navigateur. Le mode **8.5** est le mode à privilégier. Il bénéficie de discriminateurs étroits permettant d'écarter un maximum de trajets indirects. La technique d'élaboration des résidus, qui permet à tout moment de déterminer l'intégrité des canaux et du navigateur à l'aide de mesures pertinentes, synchrones et peu bruitées est avantageusement utilisée pour maintenir le navigateur dans le mode sain **8.5.** Ce mode facilite l'exclusion de mesures contaminées et, en cas de perte d'intégrité du navigateur, permet de revenir à un état sain de manière rapide et robuste.

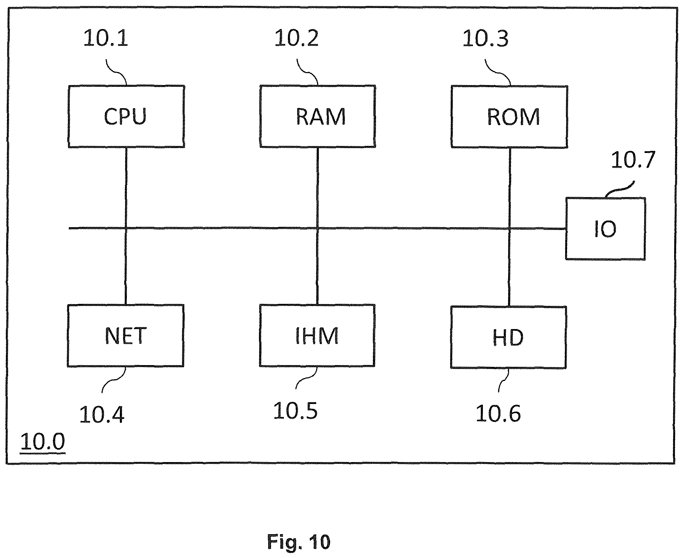

La **figure 10** est un bloc-diagramme schématique d'un dispositif de traitement de l'information **10.0** pour la mise en œuvre d'un ou plusieurs modes de réalisation de l'invention. Le dispositif **10.0** de traitement de l'information peut être un périphérique tel qu'un micro-ordinateur, un poste de travail ou d'un terminal mobile de télécommunication. Le dispositif **10.0** comporte un bus de communication connecté à :

- une unité centrale de traitement **10.1,** tel qu'un microprocesseur, notée CPU ;
- une mémoire à accès aléatoire **10.2,** notée RAM, pour mémoriser le code exécutable du procédé de réalisation de l'invention ainsi que les registres adaptés à enregistrer des variables et des paramètres nécessaires pour la mise en œuvre du procédé selon des modes de réalisation de l'invention, la capacité de mémoire de celui-ci peut être complété par une mémoire RAM optionnelle connectée à un port d'extension, par exemple ;
- une mémoire morte **10.3,** notée ROM, pour stocker des programmes informatiques pour la mise en œuvre des modes de réalisation de l'invention ;
- une interface réseau **10.4** est normalement connectée à un réseau de communication sur lequel des données numériques à traiter sont transmises ou reçues. L'interface réseau **10.4** peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lus à partir de l'interface de réseau pour la réception sous le contrôle de l'application logiciel exécuté dans le processeur **10.1** ;
- une interface utilisateur **10.5** pour recevoir des entrées d'un utilisateur ou pour afficher des informations à un utilisateur ;
- un support de stockage optionnel **10.6** noté HD ;
- un module d'entrée/sortie **10.7** pour la réception / l'envoi de données depuis / vers des périphériques externes tels que disque dur, support de stockage amovible ou autres.

Le code exécutable peut être stocké dans une mémoire morte **10.3,** sur le support de stockage **10.6** ou sur un support amovible numérique tel que par exemple un disque. Selon une variante, le code exécutable des programmes peuvent être reçu au moyen d'un réseau de communication, via l'interface réseau **10.4,** afin d'être stocké dans l'un des moyens de stockage du dispositif de communication **10.0,** tel que le support de stockage **10.6,** avant d'être exécuté.

L'unité centrale de traitement **10.1** est adaptée pour commander et diriger l'exécution des instructions ou des portions de code logiciel du programme ou des programmes selon l'un des modes de réalisation de l'invention, instructions qui sont stockées dans l'un des moyens de stockage précités. Après la mise sous tension, le CPU **10.1** est capable d'exécuter des instructions stockées dans la mémoire RAM principale **10.2,** relatives à une application logicielle, après que ces instructions aient été chargées de la ROM par exemple. Un tel logiciel, lorsqu'il est exécuté par le processeur **10.1,** provoque que les étapes des organigrammes présentés dans la **figure 8** pour être exécutées.

Dans ce mode de réalisation, l'appareil est un appareil programmable qui utilise un logiciel pour mettre en œuvre l'invention. Toutefois, à titre subsidiaire, la présente invention peut être mise en œuvre dans le matériel (par exemple, sous la forme d'un circuit intégré spécifique ou ASIC).

Naturellement, pour satisfaire des besoins spécifiques, une personne compétente dans le domaine de l'invention pourra appliquer des modifications dans la description précédente.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

**Revendications**

1. Dispositif de positionnement par satellite, comprenant :

   - un module (2.1) de réception radio et de numérisation des signaux (2.5) reçus depuis les satellites, chaque signal reçu d'un satellite définissant un canal satellite ;
   - un estimateur (2.2) conçu pour déterminer une mesure de délai de code et de fréquence de chaque canal satellite ;
   - un navigateur (2.3) conçu pour déterminer à partir de l'ensemble des mesures de l'estimateur une estimation (2.7) de position et de vitesse du dispositif ;

   **caractérisé en ce que** l'estimateur (2.2) comprend pour chaque canal satellite :

   - une boucle de poursuite scalaire (4.2) de la mesure de délai de code;
   - une boucle de poursuite vectorielle (5.2) de la mesure de délai dudit code en parallèle de la boucle scalaire ; et
   - des moyens de comparaison des estimées de délai de la boucle de poursuite scalaire (4.2) et de la boucle de poursuite vectorielle (5.2) produites par les estimateurs desdites boucles scalaires et vectorielle fonctionnant en parallèle, pour la détermination de l'intégrité de la mesure de délai et donc du canal satellite concerné.

2. Dispositif selon la revendication 1, **caractérisé en ce que**, lesdites boucles scalaires (6.10) et vectorielles (6.20) comprenant des oscillateurs contrôlés numériquement (6.14, 6.24) porteurs de l'estimée de délai desdites boucles, les moyens de comparaison des estimées de délai de la boucle de poursuite scalaire et de la boucle de poursuite vectorielle comprennent des moyens de comparaison de l'état desdits oscillateurs contrôlés numériquement.

3. Dispositif selon la revendication 1, **caractérisé en ce que**, lesdites boucles scalaires (6.10) et vectorielles (6.20) comprenant des discriminateurs de délai (6.12, 6.22), les moyens de comparaison des estimées de délai de la boucle de poursuite scalaire et de la boucle de poursuite vectorielle comprennent des moyens de comparaison des sorties desdits discriminateurs.

4. Dispositif selon l'une des revendications précédentes, **caractérisé en ce que** l'estimateur (2.2) comporte en outre :

- des moyens de détermination de l'intégrité du navigateur (2.3) à partir de la détermination de l'intégrité des mesures de délai de l'ensemble des canaux satellites.

5. Dispositif selon l'une des revendications précédentes, **caractérisé en ce que** le navigateur (2.3) comprend des moyens pour écarter les mesures issues de canaux satellites déterminés comme contaminés par l'estimateur (2.2).

6. Dispositif selon l'une des revendications précédentes, **caractérisé en ce que** :

- la boucle de poursuite vectorielle (7.4) comprend un premier discriminateur (7.42), dit étroit, utilisant des corrélateurs dont le décalage est basé sur la puissance du bruit affectant l'estimation globale du navigateur ;
- la boucle de poursuite vectorielle comprend un second discriminateur (7.41), dit large, utilisant des corrélateurs dont le décalage est basé sur la puissance du bruit affectant l'estimation locale scalaire ;
- des moyens de contrôle pour déterminer quel discriminateur est utilisé pour établir la mesure de délai de la boucle vectorielle.

7. Procédé de contrôle d'un dispositif de positionnement par satellite, comprenant un module (2.1) de réception radio et de numérisation des signaux (2.5) reçus depuis les satellites, chaque signal reçu d'un satellite définissant un canal satellite ; un estimateur (2.2) pour déterminer une mesure de délai de code et de fréquence de chaque canal satellite et un navigateur (2.3) pour déterminer à partir de l'ensemble des mesures de l'estimateur une estimation (2.7) de position et de vitesse du dispositif ; l'estimateur comprenant pour chaque canal satellite : une boucle de poursuite scalaire (4.2) de la mesure de délai de code; une boucle de poursuite vectorielle (5.2) de la mesure de délai de code en parallèle de la boucle scalaire ; **caractérisé en ce qu'il comprend :**

- une étape de comparaison des mesures de délai de la boucle de poursuite scalaire et de la boucle de poursuite vectorielle produites par les estimateurs desdites boucles scalaires et vectorielle fonctionnant en parallèle pour la détermination de l'intégrité de la mesure de délai et donc du canal satellite concerné.

8. Procédé selon la revendication 7 **caractérisé en ce que**, la boucle de poursuite vectorielle (7.4) comprenant un premier discriminateur (7.41), dit large, utilisant des corrélateurs dont le décalage est basé sur la puissance du bruit affectant l'estimation locale scalaire ; la boucle de poursuite vectorielle comprenant en outre un second discriminateur (7.42), dit étroit, utilisant des corrélateurs dont le décalage est basé sur la puissance du bruit affectant l'estimation globale du navigateur; le procédé comprend en outre :

- une étape pour déterminer quel discriminateur est utilisé pour établir la mesure de délai de la boucle vectorielle.

9. Procédé selon la revendication 8, **caractérisé en ce qu'il comprend :**

- une étape (8.1) d'acquisition des satellites ;
- une étape (8.2) de basculement dans un mode scalaire lorsqu'un nombre suffisant de satellite est acquis, la mesure de l'estimateur étant alors produite par la boucle scalaire ;
- une étape (8.3) de basculement dans un mode vectoriel dégradé lorsque le navigateur a pu converger vers une estimation de position et de vitesse, la mesure de l'estimateur étant alors produite par la boucle vectorielle sur la base du discriminateur large, la boucle scalaire étant poursuivie en parallèle ;
- une première étape de basculement dans un mode de transition (8.4), la mesure de l'estimateur étant alors produite par la boucle vectorielle sur la base du discriminateur large et du discriminateur étroit, la boucle scalaire étant poursuivie en parallèle ;
- une étape (8.5) de basculement dans un mode vectoriel sain lorsque l'état du navigateur est déterminé comme sain par comparaison des mesures de la boucle scalaire et de la boucle vectorielle, la mesure de l'estimateur étant alors produite par la boucle vectorielle sur la base du discriminateur étroit, la boucle scalaire étant poursuivie en parallèle ;
- une seconde étape de basculement dans le mode de transition (8.4) lorsque l'état du navigateur est déterminé comme contaminé par comparaison des mesures de la boucle scalaire et de la boucle vectorielle.

10. Programme d'ordinateur comprenant des instructions adaptées à la mise en œuvre de chacune des étapes du procédé selon l'une quelconque des revendications 7 à 9 lorsque ledit programme est exécuté sur un dispositif de positionnement par satellite selon l'une quelconque de revendications 1 à 6.

11. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 7 à 9, lorsque ledit programme est exécuté sur un dispositif de positionnement par satellite selon l'une quelconque de revendications 1 à 6.

**Patentansprüche**

1. Vorrichtung zur Positionierung via Satellit, umfassend:

   - ein Modul (2.1) zum Funkempfang und zur Digitalisierung der von den Satelliten empfangenen Signale (2.5), wobei jedes von einem Satelliten empfangene Signal einen Satellitenkanal definiert;
   - einen Schätzer (2.2), der gestaltet ist, um ein Vorzögerungsmaß eines Codes und einer Frequenz für jeden Satellitenkanal zu bestimmen;
   - einen Navigator (2.3), der gestaltet ist, um eine Schätzung (2.7) der Position und der Geschwindigkeit der Vorrichtung ausgehend von der Gesamtheit der Maße des Schätzers zu bestimmen;

   **dadurch gekennzeichnet, dass** der Schätzer (2.2) für jeden Satellitenkanal Folgendes umfasst:

   - eine skalare Verfolgungsschleife (4.2) des Maßes der Codeverzögerung;
   - eine vektorielle Verfolgungsschleife (5.2) des Vorzögerungsmaßes des Codes parallel zu der skalaren Schleife; und
   - Mittel zum Vergleichen der Schätzungen der Verzögerung der skalaren Verfolgungsschleife (4.2) und der vektoriellen Verfolgungsschleife (5.2), die von den Schätzern der parallel arbeitenden skalaren und vektoriellen Schleifen erzeugt werden, um die Integrität des Vorzögerungsmaßes und somit des betreffenden Satellitenkanals zu bestimmen.

2. Vorrichtung nach Anspruch 1, **dadurch gekennzeichnet, dass** die skalaren (6.10) und vektoriellen (6.20) Schleifen digital gesteuerte Oszillatoren (6.14, 6.24) umfassen, die die Verzögerungsschätzung der Schleifen tragen, wobei die Mittel zum Verzögerungsschätzungen der skalaren Verfolgungsschleife und der vektoriellen Verfolgungsschleife Mittel zum Vergleichen des Zustands der digital gesteuerten Oszillatoren umfassen.

3. Vorrichtung nach Anspruch 1, **dadurch gekennzeichnet, dass** die skalaren (6.10) und vektoriellen (6.20) Schleifen Verzögerungsdiskriminatoren (6.12, 6.22) umfassen, wobei die Mittel zum Vergleichen der Verzögerungsschätzungen der skalaren Verfolgungsschleife und der vektoriellen Verfolgungsschleife Mittel zum Vergleichen der Ausgänge der genannten Diskriminatoren umfassen.

4. Vorrichtung nach einem der vorstehenden Ansprüche, **dadurch gekennzeichnet, dass** der Schätzer (2.2) weiter Folgendes beinhaltet:

   - Mittel zum Bestimmen der Integrität des Navigators (2.3) ausgehend von der Bestimmung der Integrität der Verzögerungsmaße aller Satellitenkanäle.

5. Vorrichtung nach einem der vorstehenden Ansprüche, **dadurch gekennzeichnet, dass** der Navigator (2.3) Mittel zum Verwerfen der Maße, die von den Satellitenkanälen stammen und von dem Schätzer (2.2) als kontaminiert bestimmt wurden, umfasst.

6. Vorrichtung nach einem der vorstehenden Ansprüche, **dadurch gekennzeichnet, dass**:

   - die vektorielle Verfolgungsschleife (7.4) einen ersten sogenannten engen Diskriminator (7.42) umfasst, der Korrelatoren verwendet, deren Versatz auf der Leistung des Rauschens basiert, das die globale Schätzung des Navigators beeinflusst;
   - die vektorielle Verfolgungsschleife einen zweiten sogenannten weiten Diskriminator (7.41) umfasst, der Korrelatoren verwendet, deren Versatz auf der Leistung des Rauschens basiert, das die skalare lokale Schätzung beeinflusst;
   - Steuerungsmittel zum Bestimmen, welcher Diskriminator zur Ermittlung des Verzögerungsmaßes der vektoriellen Schleife verwendet wird.

7. Verfahren zum Steuern einer Vorrichtung zur Positionierung via Satellit, umfassend ein Modul (2.1) zum Funkempfang und zur Digitalisierung der von den Satelliten empfangenen Signale (2.5), wobei jedes von einem Satelliten empfangene Signal einen Satellitenkanal definiert; einen Schätzer (2.2) zum Bestimmen eines Vorzögerungsmaßes eines Codes und einer Frequenz für jeden Satellitenkanal; und einen Navigator (2.3) zum Bestimmen einer Schätzung (2.7) einer Position und einer Geschwindigkeit der Vorrichtung ausgehend von der Gesamtheit der Maße des Schätzers; wobei der Schätzer für jeden Satellitenkanal umfasst: eine skalare Verfolgungsschleife (4.2) des Maßes der Codeverzögerung; eine vektorielle Verfolgungsschleife (5.2) des Maßes der Codeverzögerung parallel zu der skalaren Schleife; **dadurch gekennzeichnet, dass** es umfasst:

- einen Schritt des Vergleichens der Verzögerungsmaße der skalaren und vektoriellen Verfolgungsschleifen, die von den Schätzern der parallel arbeitenden skalaren und vektoriellen Schleifen erzeugt werden, um die Integrität des Verzögerungsmaßes und somit des betreffenden Satellitenkanals zu bestimmen.

**8.** Verfahren nach Anspruch 7, **dadurch gekennzeichnet, dass** die vektorielle Verfolgungsschleife (7.4) einen ersten sogenannten weiten Diskriminator (7.41) umfasst, der Korrelatoren verwendet, deren Versatz auf der Leistung des Rauschens basiert, das die skalare lokale Schätzung beeinflusst; und wobei die vektorielle Verfolgungsschleife außerdem einen zweiten sogenannten engen Diskriminator (7.42) umfasst, der Korrelatoren verwendet, deren Versatz auf der Leistung des Rauschens basiert, das die globale Schätzung des Navigators beeinflusst; und wobei das Verfahren weiter umfasst:

- einen Schritt zum Bestimmen, welcher Diskriminator zur Ermittlung des Maßes für die Verzögerung der vektoriellen Schleife verwendet wird.

**9.** Verfahren nach Anspruch 8, **dadurch gekennzeichnet, dass** es umfasst:

- einen Schritt (8.1) zur Erfassung der Satelliten;
- einen Schritt (8.2) des Umschaltens in einen skalaren Modus, wenn eine ausreichende Anzahl von Satelliten erfasst wird, wobei das Maß des Schätzers dann durch die skalare Schleife erzeugt wird;
- einen Schritt (8.3) des Umschaltens in einen degradierten vektoriellen Modus, wenn sich der Navigator einer Schätzung von Position und Geschwindigkeit annähern könnte, wobei das Maß des Schätzers dann von der vektoriellen Schleife auf der Basis des weiten Diskriminators erzeugt wird, wobei die skalare Schleife parallel verfolgt wird;
- einen ersten Schritt des Umschaltens in einen Übergangsmodus (8.4), wobei das Maß des Schätzers dann von der vektoriellen Schleife auf der Basis des weiten Diskriminators und des engen Diskriminators erzeugt wird, wobei die skalare Schleife parallel verfolgt wird;
- einen Schritt (8.5) des Umschaltens in einen gesunden vektoriellen Modus, wenn der Zustand des Navigators durch Vergleich der Maße der skalaren Schleife und der vektoriellen Schleife als gesund bestimmt wird, wobei das Maß des Schätzers dann von der vektoriellen Schleife auf der Basis des engen Diskriminators erzeugt wird, wobei die skalare Schleife parallel verfolgt wird;
- einen zweiten Schritt des Umschaltens in den Übergangsmodus (8.4), wenn der Zustand des Navigators durch Vergleich der Maße der skalaren Schleife und der Vektorschleife als kontaminiert bestimmt wird.

**10.** Computerprogramm, umfassend Anweisungen, die angepasst sind, jeden der Verfahrensschritte nach einem der Ansprüche 7 bis 9 auszuführen, wenn das Programm an einer Vorrichtung zur Positionierung via Satellit nach einem der Ansprüche 1 bis 6 ausgeführt wird.

**11.** Mittel zum Speichern von Informationen, herausnehmbar oder nicht, teilweise oder vollständig durch einen Computer oder einen Mikroprozessor lesbar, umfassend Codeanweisungen eines Computerprogramms zur Ausführung jedes der Verfahrensschritte nach einem der Ansprüche 7 bis 9, wenn das Programm an einer Vorrichtung zur Positionierung via Satellit nach einem der Ansprüche 1 bis 6 ausgeführt wird.

**Claims**

**1.** Satellite positioning device, comprising:

- a module (2.1) for radio receiving and digitising signals (2.5) received from the satellites, each signal received from a satellite defining a satellite channel;
- an estimator (2.2) designed for determining a measurement of the code delay and frequency of each satellite channel;
- a navigator (2.3) designed for determining from all of the measurements of the estimator an estimate (2.7) of the position and speed of the device;

**characterised in that** the estimator (2.2) comprises for each satellite channel:

    - a scalar tracking loop (4.2) of the measurement of the code delay;
    - a vector tracking loop (5.2) of the measurement of the code delay in parallel with the scalar loop; and
    - means of comparison of the delay estimates of the scalar tracking loop (4.2) and of the vector tracking loop (5.2) produced by the estimators of said scalar and vector loops operating in parallel, for determining the integrity of the measurement of the delay and therefore of the satellite channel concerned.

2. Device according to claim 1, **characterised in that**, said scalar (6.10) and vector (6.20) loops comprising numerically controlled oscillators (6.14, 6.24) carriers of the estimate of the delay of said loops, the means for comparing estimates of the delay of the scalar tracking loop and of the vector tracking loop comprise means for comparing the state of said numerically controlled oscillators.

3. Device according to claim 1, **characterised in that**, said scalar (6.10) and vector (6.20) loops comprising discriminators of the delay (6.12, 6.22), the means for comparing estimates of the delay of the scalar tracking loop and of the vector tracking loop comprising means for comparing the outputs of said discriminators.

4. Device according to one of the preceding claims, **characterised in that** the estimator (2.2) further comprises:

    - means for determining the integrity of the navigator (2.3) from the determination of the integrity of the measurements of the delay of all of the satellite channels.

5. Device according to one of the preceding claims, **characterised in that** the navigator (2.3) comprises means for discarding the measurements from satellite channels determined as contaminated by the estimator (2.2).

6. Device according to one of the preceding claims, **characterised in that**:

    - the vector tracking loop (7.4) comprises a first discriminator (7.42), referred to as narrow, using correlators the offset of which is based on the power of the noise affecting the overall estimate of the navigator;
    - the vector tracking loop comprises a second discriminator (7.41), referred to as wide, using correlators the offset of which is based on the power of the noise affecting the local scalar estimate;
    - means of control for determining which discriminator is used to establish the measurement of the delay of the vector loop.

7. Method for controlling a satellite positioning device, comprising a module (2.1) for radio receiving and digitising signals (2.5) received from the satellites, each signal received from a satellite defining a satellite channel; an estimator (2.2) for determining a measurement of the code delay and frequency of each satellite channel and a navigator (2.3) for determining from all of the measurements of the estimator an estimate (2.7) of the position and speed of the device; the estimator comprising for each satellite channel: a scalar tracking loop (4.2) of the measurement of the code delay; a vector tracking loop (5.2) of the measurement of the code delay in parallel with the scalar loop; **characterised in that** it comprises:

    - a step of comparing measurements of the delay of the scalar tracking loop and of the vector tracking loop produced by the estimators of said scalar and vector loops operating in parallel for determining the integrity of the measurement of the delay and therefore of the satellite channel concerned.

8. Method according to claim 7 **characterised in that**, the vector tracking loop (7.4) comprising a first discriminator (7.41), referred to as wide, using correlators the offset of which is based on the power of the noise affecting the local scalar estimate; the vector tracking loop further comprising a second discriminator (7.42), referred to as narrow, using correlators the offset of which is based on the power of the noise affecting the overall estimate of the navigator; the method further comprises:

    - a step for determining which discriminator is used to establish the measurement of the delay of the vector loop.

9. Method according to claim 8, **characterised in that** it comprises:

    - a step (8.1) of acquiring satellites;
    - a step (8.2) of switching to a scalar mode when a sufficient number of satellite is acquired, the measurement of the estimator then being produced by the scalar loop;
    - a step (8.3) of switching to a degraded vector mode when the navigator was able to converge towards an estimate of the position and speed, the measurement of the estimator then being produced by the vector loop based on the wide discriminator, the scalar loop being tracked in parallel;

- a first step of switching to a transition mode (8.4), the measurement of the estimator then being produced by the vector loop based on the wide discriminator and on the narrow discriminator, the scalar loop being tracked in parallel;

- a step (8.5) of switching to a healthy vector mode when the state of the navigator is determined to be healthy by comparison of the measurements of the scalar loop and of the vector loop, the measurement of the estimator then being produced by the vector loop based on the narrow discriminator, the scalar loop being tracked in parallel;

- a second step of switching to the transition mode (8.4) when the state of the navigator is determined to be contaminated by comparison of the measurements of the scalar loop and of the vector loop.

10. Computer program comprising instructions suitable for the implementation of each one of the steps of the method according to any of claims 7 to 9 when said program is executed on a satellite positioning device according to any one of claims 1 to 6.

11. Means for storing information, removable or not, partially or entirely able to be read by a computer or a microprocessor comprising code instructions of a computer program for the execution of each one of the steps of the method according to any of claims 7 to 9, when said program is executed on a satellite positioning device according to any one of claims 1 to 6.

1.1

1.5

1.3

1.4

1.2

**Fig. 1**

Capteurs
2.4

2.5

2.7

2.6

Réception RF
Numérisation

2.1

Estimateur

2.2

Navigateur

2.3

2.9

2.8

**Fig. 2**

Fig. 3

Fig. 9

Fig. 4

Fig. 5

**Fig. 6**

7.3

7.1

7.31

| Discriminateur large |

STL NCO

| Corrélateur Prompt |

7.33

| Discriminateur large |

7.41

7.2

VTL NCO

| Discriminateur étroit |

7.42

| Corrélateur Prompt |

7.43

7.4

**Fig. 7**

**Fig. 8**

**Fig. 10**